# EUROPEAN PATENT APPLICATION

(11) **EP 2 395 317 A1**
(43) Date of publication of application: **14.12.2011**
(21) Application number: 11169271.1
(22) Date of filing: 09.06.2011
(51) Int. Cl.: G01B 11/24, G01M 11/02

(54) **Lightwave interference measurement apparatus**

(30) Priority: 14.06.2010 JP 2010135573; 14.06.2010 JP 2010135574
(71) Applicant: FUJIFILM Corporation, Tokyo (JP)
(72) Inventor: Ge, Zongtao, Saitama (JP); Tomimizu, Masaaki, Saitama (JP); Kanda, Hideo, Saitama (JP); Iwazaki, Hiroyuki, Saitama (JP); Koizumi, Noboru, Saitama (JP); Saito, Takayuki, Saitama (JP); Mochitate, Seiji, Saitama (JP); Ogasawara, Takeshi, Saitama (JP); Nakajima, Takashi, Saitama (JP)
(74) Representative: HOFFMANN EITLE

(57) **Abstract**

A microinterferometer (1) applies low coherent measurement light, which travels along an optical axis (L) in a converging manner, to a front surface (95) of a flange (92). A part of the measurement light is reflected inside an interferometric optical system (14), and becomes reference light. A part of the measurement light passed through the interferometric optical system (14) is reflected from the front surface (95) of the flange (92), and is incident again upon the interferometric optical system (14). By combining the reflected light with the reference light, interference light is obtained. While a sample rotating stage (54) rotates a sample lens (9) through 360 degrees, a first imaging camera (24) having one-dimensional image sensor (23) captures 3600 images of the interference light, i.e., the image of the interference light is captured every time the sample lens (9) is rotated by 0.1 degrees. Based on the images of interference fringes, the shape of the front surface (95) of the flange (92) is analyzed.

## Description

### BACKGROUND OF THE INVENTION

### 1. Field of the Invention

The present invention relates to a lightwave interference measurement apparatus that measures the shape of a test surface based on an image of interference fringes captured by an image sensor.

### 2. Description Related to the Prior Art

So-called fitting lenses are recently in practical use, for the purpose of allowing the plural lenses to be concentrically aligned along an optical axis direction in a lens barrel. Each of the fitting lenses has a conical fitting surface formed therein. The adjoining plural lenses are fitted to and aligned with each other, using the conical fitting surfaces.

In the fitting lens, the fitting surface requires high formation accuracy, in order to place the individual lenses in proper positions and obtain desired optical performance. Thus, it is required to measure formation errors (errors in an inclination angle, a surface shape, and a diameter) of the fitting surface, and feed the measured formation errors back to a production process, intending to improve the formation accuracy.

Conventionally, a three-dimensional measuring apparatus having a measuring probe such as an optical probe and an atomic force probe is used in measurement of the fitting lens (refer to US Patent No. 5,315,374 and Japanese Patent No. 4407254).

In the above three-dimensional measuring apparatus, the measuring probe scans a test surface, and the shape of the test surface is measured and analyzed based on three-dimensional coordinate data of a tip point of the measuring probe. The three-dimensional measuring apparatus, however, has a problem of long measurement time due to slow scan speed. For example, several hours are required for single measurement.

### SUMMARY OF THE INVENTION

An object of the present invention is to provide a lightwave interference measurement apparatus that can measure in a short time the shape or the like of a test surface formed of a rotationally symmetric ruled surface, such as a fitting surface of a fitting lens.

To achieve the above and other objects of the present invention, a lightwave interference measurement apparatus according to the present invention includes a sample rotating stage, an interferometric optical system, an imaging system having an image sensor, and a surface shape analyzer. The sample rotating stage rotates a test surface about a rotational axis. The interferometric optical system applies measurement light traveling along an optical axis in a converging manner to the test surface, and produces interference light by combining reflected light of the measurement light reflected from the test surface with reference light. The imaging system takes in the interference light in each of plural rotational positions of the test surface to obtain image data of interference fringes. The surface shape analyzer analyzes the shape of the test surface based on the image data of the interference fringes.

As the image sensor, a one-dimensional image sensor or a two-dimensional image sensor is used. In the case of using the one-dimensional image sensor, the sample rotating stage continuously rotates the test surface, and the imaging system captures an image of the interference fringes during continuous rotation of the test surface. In the case of using the two-dimensional image sensor, the sample rotating stage intermittently rotates the test surface, and the imaging system captures an image of the interference fringes while the test surface is stopped between intermittent rotational movements.

Furthermore, in the case of using the one-dimensional image sensor, the lightwave interference measurement apparatus may include a light dividing optical element and an adjustment imaging system having a two-dimensional image sensor. The light dividing optical element is disposed between the interferometric optical system and the imaging system, and divides the interference light by reflection and transmission. The adjustment imaging system takes in the interference light reflected by the light dividing optical element.

An image of interference fringes captured by the two-dimensional image sensor is used in optical axis adjustment and central axis adjustment. In the optical axis adjustment, the position of the optical axis relative to a central axis of the test surface is adjusted. In the central axis adjustment, the position of the central axis relative to the rotational axis is adjusted.

Furthermore, the lightwave interference measurement apparatus preferably includes an inclination angle calculator. The inclination angle calculator calculates an inclination angle of the test surface based on the image data of the interference fringes.

The sample may be a fitting lens. The test surface may be a fitting surface formed of a circular conical surface.

According to the lightwave interference measurement apparatus according to the present invention, while the converging measurement light is applied from the interferometric optical system to the test surface, the test surface is continuously or intermittently rotated about the central axis. The applied measurement light is partly reflected from the test surface. This reflected light and the reference light are combined into the interference light, and form the interference fringes. The one-dimensional or two-dimensional image sensor captures the image of the interference fringes at every different rotational position. Based on the images, the shape of the test surface is obtained. The lightwave interference measurement apparatus according to the present invention can take the images of the interference fringes corresponding to the entire test surface in a shorter time than that required by a conventional three-dimensional measuring apparatus, which scans the test surface by a measuring probe. Therefore, it is possible to measure in a short time the shape of the test surface formed of a rotationally symmetric ruled surface.

### BRIEF DESCRIPTION OF THE DRAWINGS

For more complete understanding of the present invention, and the advantage thereof, reference is now made to the following descriptions taken in conjunction with the accompanying drawings, in which:
Fig. 1 is a perspective view of a lightwave interference measurement apparatus according to the present invention;
Fig. 2 is a schematic view of an optical system contained in a microinterferometer according to a first embodiment;
Fig. 3 is a block diagram of an analysis and control device;
Fig. 4 is an explanatory view of the position of the microinterferometer in measuring a fitting conical surface;
Fig. 5 is an explanatory view of the position of the microinterferometer in measuring a fitting bottom surface;
Fig. 6A is a cross sectional view of a sample lens;
Fig. 6B is a top view of the sample lens;
Fig. 7 is a schematic view of an adjustment jig; and
Fig. 8 is a schematic view of an optical system contained in a microinterferometer according to a second embodiment.

### DESCRIPTION OF THE PREFERRED EMBODIMENTS

### First Embodiment

### <Structure and Measurement Items of Sample Lens>

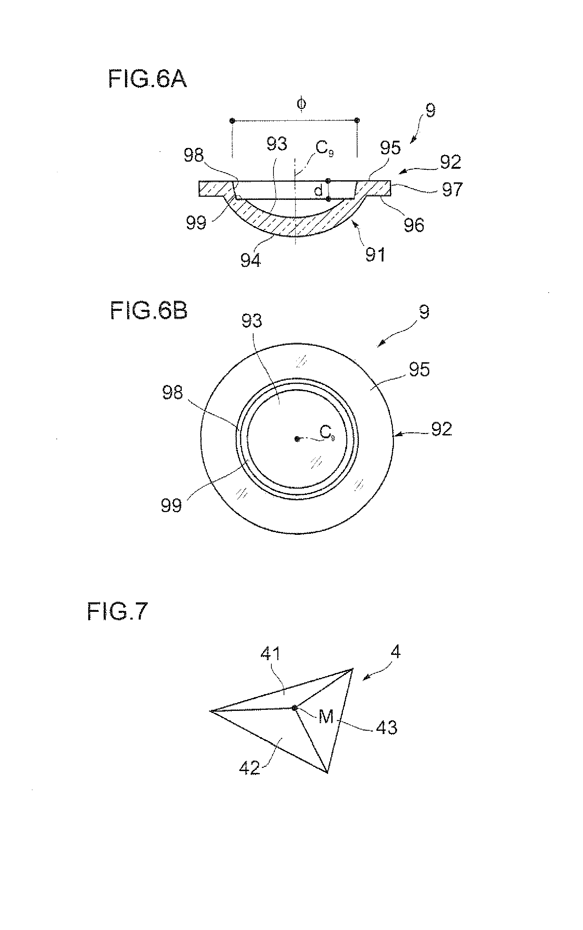

As shown in Figs. 6A and 6B, a sample lens 9 is constituted of a lens section 91 and a flange 92 formed on the rim of the lens section 91. The lens section 91 includes an aspheric first lens surface 93 and an aspheric second lens surface 94, both of which are rotationally symmetric about a central axis C₉. The flange 92 is in the shape of a ring centered on the central axis C₉. A front surface 95 and a rear surface 96 of the flange 92 are orthogonal to the central axis C₉. A side surface 97 of the flange 92 is a circumferential surface centered on the central axis C₉.

A fitting conical surface 98 and a fitting bottom surface 99 are formed between the first lens surface 93 and the front surface 95 of the flange 92. The fitting conical surface 98 is formed of a circular conical surface rotationally symmetric about the central axis C₉. The fitting bottom surface 99 is a ring-shaped plane centered on the central axis C₉, and is orthogonal to the central axis C₉. Note that, the sample lens 9 is a fitting lens used in combination with another lens (not shown). The lens to be combined is fitted onto the sample lens 9 with making contact with the front surface 95 of the flange 92, the fitting conical surface 98, and the fitting bottom surface 99.

In this sample lens 9, five measurement items are established including the shape of the front surface 95 of the flange 92, the shape of the fitting conical surface 98, an inclination angle of the fitting conical surface 98, the inner diameter of the flange 92, and a fitting step height. Note that, the inclination angle of the fitting conical surface 98 denotes an angle that a generatrix of the circular conical surface of the fitting conical surface 98 forms with the central axis C₉. The inner diameter of the flange 92 denotes a diameter φ on the top of the fitting conical surface 98. The fitting step height denotes a distance "d" between the front surface 95 of the flange 92 and the fitting bottom surface 99 along the direction of the central axis C₉.

### <Structure of Apparatus>

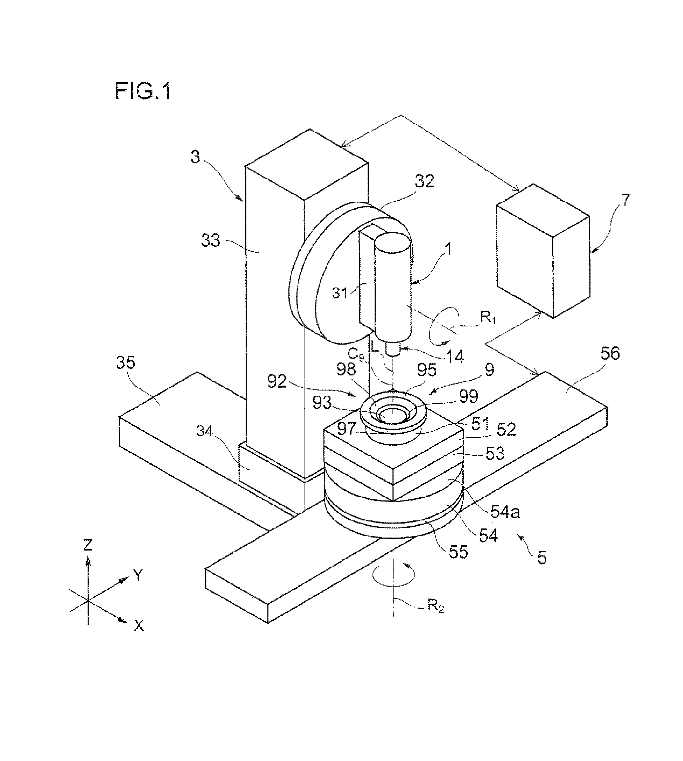

As shown in Fig. 1, a lightwave interference measurement apparatus is provided with a microinterferometer 1, a measurement system alignment section 3, a sample alignment section 5, and an analysis and control device 7. The measurement system alignment section 3 adjusts the posture and position of the microinterferometer 1. The sample alignment section 5 adjusts the posture and position of the sample lens 9.

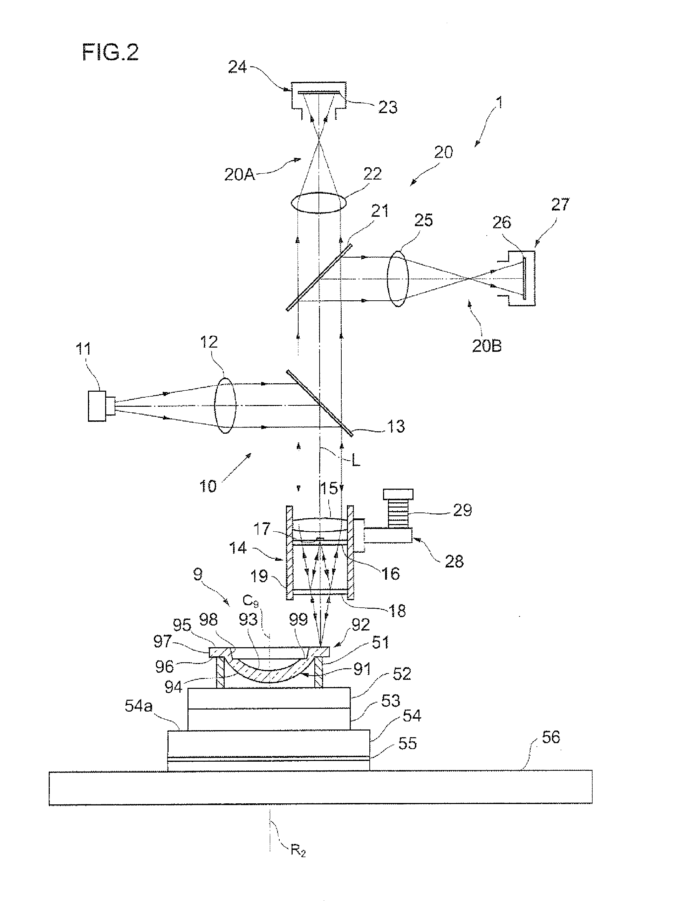

As shown in Fig. 2, the microinterferometer 1 is provided with a measurement light emitting system 10 and an imaging system 20. The measurement light emitting system 10 includes a light source 11 such as an LED or SLD, a collimater lens 12, a light dividing optical element 13, and an interferometric optical system 14. The light source 11 emits low coherent light rays as measurement light. The collimater lens 12 collimates the measurement light emitted from light source 11. The light dividing optical element 13 is, for example, a half mirror, and reflects the measurement light from the collimator lens 12 in a downward direction in the drawing. The interferometric optical system 14 makes the measurement light from the light dividing optical element 13 converge on a test surface of the sample lens 9 along an optical axis L. The interferometric optical system 14 combines reflected light of the measurement light with reference light, to obtain interference light.

The interferometric optical system 14, which composes a Mirau objective system, is constituted of a converging lens 15, a transparent flat plate 16, a reflective element 17, a semitransparent reflective element 18, and a lens barrel 19. The converging lens converts the measurement light from parallel rays into converging rays. The transparent flat plate 16 is disposed under the converging lens 15 in Fig. 2. The reflective element 17 is disposed on a top surface of the transparent flat plate 16. The semitransparent reflective element 18 is disposed in an optical path of the measurement light from the converging lens 15. The lens barrel 19 contains the converging lens 15, the transparent flat plate 16, the reflective element 17, and the semitransparent reflective element 18. The semitransparent reflective element (half mirror) 18 reflects a part of the measurement light from the converging lens 15, while passes the remaining measurement light to let the remaining measurement light fall on the test surface of the sample lens 9. The measurement light passed through the semitransparent reflective element 18 is partly reflected by the test surface, and becomes the reflected light. On the other hand, the measurement light reflected by the semitransparent reflective element 18 is gathered on the reflective element 17, and is reflected by the reflective element 17 again to the semitransparent reflective element 18. After this, a part of the light is reflected again by the semitransparent reflective element 18, and becomes the reference light. The reflected light from the test surface of the sample lens 9 is combined with the reference light, resulting in obtainment of the interference light.

The interferometric optical system 14 is held by a fringe scan adapter 28 having a piezoelectric element 29. The fringe scan adapter 28 precisely adjusts the distance between the interferometric optical system 14 and the test surface of the sample lens 9, in measurement of the test surface. Also, the fringe scan adapter 28 shifts the interferometric optical system 14 along the direction of the optical axis L of the measurement light, when fringe scan measurement is performed.

On the other hand, the imaging system 20 is constituted of a light dividing optical element 21, a first imaging unit 20A, and a second imaging unit 20B. The light dividing optical element 21 divides the interference light that travels upward from the interferometric optical system 14 through the light dividing optical element 13. The first imaging unit 20A captures an image, mainly when the sample lens 9 is rotated. The second imaging unit 20B captures an image, mainly when the sample lens 9 is stopped.

The first imaging unit 20A includes a first image-forming lens 22 for gathering the interference light traveling upward through the light dividing optical element 21, and a first imaging camera 24 having a one-dimensional image sensor 23 such as a CCD or CMOS. The first imaging unit 20A takes image data of interference fringes formed by the first image-forming lens 22 on the one-dimensional image sensor 23. On the other hand, the second imaging unit 20B includes a second image-forming lens 25 for gathering the interference light reflected to the right by the light dividing optical element 21, and a second imaging camera 27 having a two-dimensional image sensor 26 such as a CCD or CMOS. The second imaging unit 20B takes image data of interference fringes formed by the second image-forming lens 25 on the two-dimensional image sensor 26. The one-dimensional image sensor 23 has a plurality of pixels arranged in a line, while the two-dimensional image sensor 26 has a plurality of pixels arranged into a matrix.

As shown in Fig. 1, the measurement system alignment section 3 includes a bracket 31, an interferometer tilting stage 32, an interferometer Z-axis moving stage 33, an interferometer Y-axis tilting stage 34, and an interferometer X-axis moving stage 35. To the bracket 31, the microinterferometer 1 is fixed. The interferometer tilting stage 32 supports the microinterferometer 1 via the bracket 31 in a tiltable manner about a rotational axis R₁ extending in an X-axis direction. The interferometer Z-axis moving stage 33 moves the microinterferometer 1 in a Z-axis direction together with the interferometer tilting stage 32. The interferometer Y-axis tilting stage 34 tilts the microinterferometer 1 about a Y-axis together with the interferometer Z-axis moving stage 33 and the like. The interferometer X-axis moving stage 35 moves the microinterferometer 1 in the X-axis direction together with the interferometer Y-axis tilting stage 34 and the like.

The sample alignment section 5 includes a sample mounting stage 51, a sample X-Y axis tilting stage 52, a sample X-Y axis moving stage 53, a sample rotating stage 54, a rotary encoder 55, and a sample Y-axis moving stage 56. The sample mounting stage 51 supports the sample lens 9 by evacuation or the like from the side of the test surface or a rear surface. The sample X-Y axis tilting stage 52 tilts the sample lens 9 about the X-axis or Y-axis via the sample mounting stage 51. The sample X-Y axis moving stage 53 moves the sample lens 9 in the X-axis or Y-axis direction together with the sample X-Y axis tilting stage 52 and the like. The sample rotating stage 54 rotates the sample lens 9 about a rotational axis R₂ extending in the Z-axis direction together with the sample X-Y axis moving stage 53 and the like. The rotary encoder 55 is mounted in the sample rotating stage 54, and detects a rotation angle of the sample rotating stage 54, that is, a rotational position of the sample lens 9 rotated by the sample rotating stage 54 about the rotational axis R₂. The sample Y-axis moving stage 56 moves the sample lens 9 in the Y-axis direction together with the sample rotating stage 54 and the like.

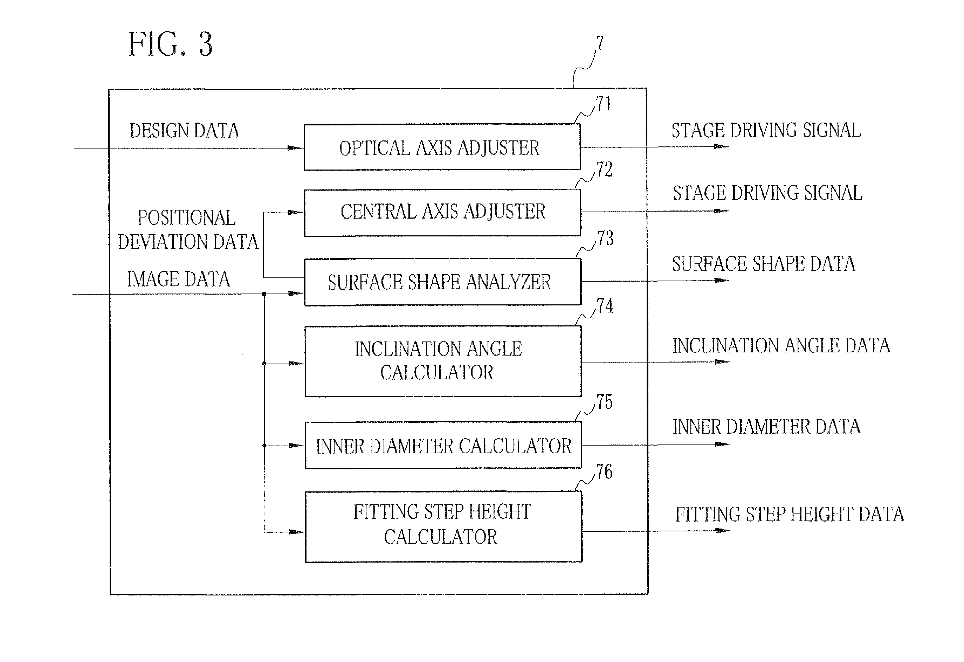

The analysis and control device 7 analyzes the shape of the sample lens 9 based on the image data of the interference fringes obtained by the imaging system 20, and controls driving of the individual stages and the like of the measurement system alignment section 3 and the sample alignment section 5. As shown in Fig. 3, the analysis and control device 7 is provided with an optical axis adjuster 71, a central axis adjuster 72, a surface shape analyzer 73, an inclination angle calculator 74, an inner diameter calculator 75, and a fitting step height calculator 76, all of which are realized by storage such as a CPU and hard disk mounted in the analysis and control device 7, programs stored to the storage, and the like.

The optical axis adjuster 71 composes an optical axis adjustment section together with the interferometer tilting stage 32, the interferometer Z-axis moving stage 33, the interferometer Y-axis tilting stage 34, the interferometer X-axis moving stage 35, and the sample Y-axis moving stage 56. The optical axis adjuster 71 adjusts the position of the optical axis L of the measurement light relative to the central axis C₉ of the test surface using each of the above stages 32 to 35 and 56 based on design data of the sample lens 9, such that the optical axis L intersects with the test surface in a virtual plane containing the central axis C₉ of the test surface (one of the front surface 95 of the flange 92, the fitting conical surface 98, and the fitting bottom surface 99) and the optical axis L, and the optical axis L is orthogonal to a tangent plane of the test surface at an intersection point of the optical axis L and the test surface.

The central axis adjuster 72 composes a central axis adjustment section together with the sample X-Y axis tilting stage 52 and the sample X-Y axis moving stage 53. The central axis adjuster 72 adjusts the position of the central axis C₉ relative to the rotational axis R₂ using each of the above stages 52 and 53, such that the central axis C₉ of the test surface is aligned with the rotational axis R₂ of the sample rotating stage 54.

The surface shape analyzer 73 analyzes the shape of the test surface based on the image data of the interference fringes taken at every different rotational position by the one-dimensional image sensor 23 of the first imaging camera 24 during rotation of the test surface.

The inclination angle calculator 74 calculates the inclination angle of the fitting conical surface 98 based on the image data of the interference fringes corresponding to the fitting conical surface 98 taken at every different rotational position.

The inner diameter calculator 75 calculates the inner diameter φ of the flange 92 (see Fig. 6A) based on the image data of the interference fringes corresponding to the fitting conical surface 98 taken at every different rotational position.

The fitting step height calculator 76 calculates the fitting step height "d" (see Fig. 6A) based on fringe contrast in each image of the interference fringes corresponding to the front surface 95 of the flange 92 and the fitting bottom surface 99.

Operation and a measurement procedure of the lightwave interference measurement apparatus will be described below.

### <Initial Adjustment of Alignment Sections>

Before measurement of the sample lens 9, an initial adjustment is carried out between the measurement system alignment section 3 and the sample alignment section 5. In the initial adjustment, the optical axis L of the microinterferometer 1 and the rotational axis R₂ of the sample rotating stage 54 are precisely aligned with each other, prior to mounting the sample lens 9 on the sample mounting stage 51. The initial adjustment is carried out manually for the most part by an operator according to the following steps:
1. In a state of stopping the sample rotating stage 54, the relative position between the microinterferometer 1 and the sample rotating stage 54 is adjusted using the interferometer Z-axis moving stage 33, the interferometer X-axis moving stage 35, and the sample Y-axis moving stage 56, such that the measurement light from the microinterferometer 1 is gathered on a rotating disk surface 54a of the sample rotating stage 54 shown in Fig. 1. As a precondition, the rotating disk surface 54a of the sample rotating stage 54 is flat and smooth with high precision.
2. While the measurement light is applied from the microinterferometer 1 to the rotating disk surface 54a after the relative position adjustment, the second imaging camera 27 having the two-dimensional image sensor 26 shown in Fig. 2 captures an image of interference fringes formed by interference between reflected light of the measurement light and reference light. A tilt of the microinterferometer 1 is adjusted using the interferometer tilting stage 32 and the interferometer Y-axis tilting stage 34 shown in Fig. 1, such that the image shows a null fringe pattern (pattern without formation of any interference fringes) or a state nearest to the null fringe pattern. Thus, the optical axis L of the measurement light and the rotational axis R₂ become in parallel with each other.
3. A parallel plate (not shown), which has precisely flat and smooth front and back surfaces, is put on the sample mounting stage 51. The relative position between the microinterferometer 1 and the sample mounting stage 51 is adjusted using the interferometer Z-axis moving stage 33, the interferometer X-axis moving stage 35, and the sample Y-axis moving stage 56, such that the measurement light from the microinterferometer 1 is gathered on the front surface of the parallel plate on the side of the microinterferometer 1.
4. While the measurement light is applied from the microinterferometer 1 to the parallel plate after the relative position adjustment, the second imaging camera 27 having the two-dimensional image sensor 26 captures an image of interference fringes formed by interference between reflected light of the measurement light and reference light. A tilt of the parallel plate put on the sample mounting stage 51 is adjusted using the sample X-Y axis tilting stage 52 shown in Fig. 1, such that the image shows a null fringe pattern or a state nearest to the null fringe pattern. Thus, the front surface of the parallel plate becomes orthogonal to the rotational axis R₂ and the optical axis L.
5. An adjustment jig 4 shown in Fig. 7 is fixed on the front surface of the parallel plate. The adjustment jig 4 has three reflecting planes 41 to 43 having inclinations different from one another. The position of an intersection point M of the three reflecting planes 41 to 43 is precisely calculated from three images of interference fringes, which are formed in applying the measurement light to the three reflecting planes 41 to 43, respectively (refer to Japanese Patent Laid-Open Publication No. 2009-139200).
6. While the adjustment jig 4 is rotated about the rotational axis R₂ using the sample rotating stage 54, the measurement light is applied from the microinterferometer 1 to the rotated adjustment jig 4. The second imaging camera 27 having the two-dimensional image sensor 26 captures a set of three images of interference fringes corresponding to the three reflecting planes 41 to 43 at every different rotational position of the adjustment jig 4. Each of the three images is formed by interference of reflected light from each of the three reflecting planes 41 to 43 and reference light.
7. From plural sets of the three images of the interference fringes captured at every rotational position, a rotational track of the intersection point M is obtained. Then, the center of the rotational track is defined as the position of the rotational axis R₂. Subsequently, the relative position between the microinterferometer 1 and the sample rotating stage 54 is adjusted using the interferometer X-axis moving stage 35 and the sample Y-axis moving stage 56 shown in Fig. 1, such that the optical axis L of the measurement light is aligned with the rotational axis R₂ at the defined position. Thereby, the initial alignment between the measurement system alignment section 3 and the sample alignment section 5 is completed.

### <Measurement of Test Surfaces>

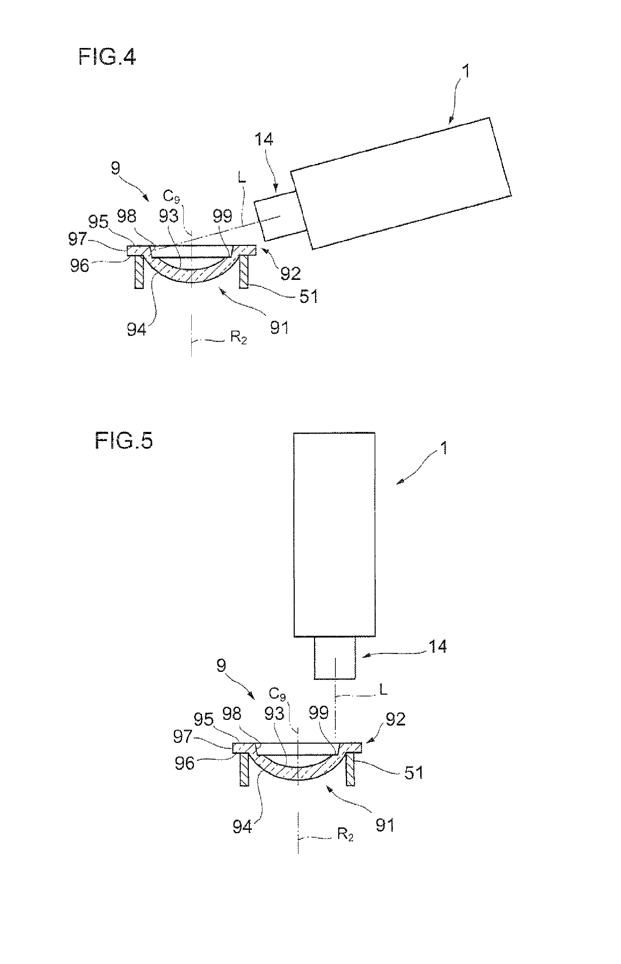

Next, each of the test surfaces (the front surface 95 of the flange 92, the fitting conical surface 98, and the fitting bottom surface 99) of the sample lens 9 is measured as follows:
1. Using the sample mounting stage 51, the sample lens 9 is supported from the side of the rear surface 96, such that the first lens surface 93 is opposed to the microinterferometer 1. Note that, in a step of mounting the sample lens 9 on the sample mounting stage 51, the central axis C₉ of the sample lens 9 is situated in the vicinity of the rotational axis R₂ of the sample rotating stage 54 (and the optical axis L of the measurement light corresponding therewith) , but is not necessarily aligned with the rotational axis R₂ of the sample rotating stage 54 with precision. To precisely align the central axis C₉ with the rotational axis R₂, the following steps are carried out by way of example.
   1-a. While the measurement light is applied from the interferometric optical system 14 to a central area (area enclosing the central axis C₉) of the first lens surface 93, the second imaging camera 27 having the two-dimensional image sensor 26 captures an image of interference fringes formed by interference between reflected light from the first lens surface 93 and reference light.
   1-b. Based on image data of the interference fringes in the central area of the first lens surface 93, the shape of the central area of the first lens surface 93 is analyzed. Thereafter, analyzed shape data is compared with design data of the first lens surface 93 of the sample lens 9, and a relative positional deviation (including a tilt deviation) between the central axis C₉ and the rotational axis R₂ (optical axis L) is obtained from a comparison result. Note that, the surface shape analyzer 73 performs the analysis of the interference fringes of the central area of the first lens surface 93 and the obtainment of the relative positional deviation between the central axis C₉ and the rotational axis R₂.
   1-c. The position of the sample lens 9 is adjusted based on the obtained relative positional deviation between the central axis C₉ and the rotational axis R₂, such that the central axis C₉ and the rotational axis R₂ are aligned to each other. Note that, the sample X-Y axis tilting stage 52 and the sample X-Y axis moving stage 53 perform the positional adjustment of the sample lens 9, at a command from the central axis adjuster 72.
   The position of the interferometric optical system 14 relative to the sample lens 9 in a state where the central axis C₉ and the rotational axis R₂ are aligned with each other is written to the optical axis adjuster 71 as a standard position in measurement. The standard position is used when changing the relative position of the interferometric optical system 14 against the sample lens 9.
2. The front surface 95 of the flange 92 is measured as follows:
   2-a. The position of the interferometric optical system 14 relative to the sample lens 9 is adjusted, such that the optical axis L orthogonally intersects with the front surface 95 of the flange 92 in a virtual plane containing the central axis C₉ and the optical axis L, and the measurement light from the interferometric optical system 14 is gathered on and applied to the front surface 95 of the flange 92 (see Fig. 2). The above relative position adjustment is automatically carried out by the optical axis adjuster 71 based on the design data of the sample lens 9, using the interferometer tilting stage 32, the interferometer Z-axis moving stage 33, the interferometer Y-axis tilting stage 34, the interferometer X-axis moving stage 35, and the sample Y-axis moving stage 56.
   2-b. Using the fringe scan adapter 28, the interferometric optical system 14 is successively shifted by a minute distance in the direction of the optical axis L. Whenever the interferometric optical system 14 is shifted, the measurement light is applied from the interferometric optical system 14 to the front surface 95 of the flange 92. The second imaging camera 27 having the two-dimensional image sensor 26 captures an image of interference fringes formed by interference between reflected light from the front surface 95 of the flange 92 and reference light.
   2-c. The fitting step height calculator 76 calculates fringe contrast (or modulation) in each image of the interference fringes captured every time the interferometric optical system 14 is shifted. Thereby, the position of the interferometric optical system 14 that maximizes the fringe contrast is obtained in the direction of the optical axis L.
   2-d. In a state where the central axis C₉ and the rotational axis R₂ are aligned with each other, the sample lens 9 is rotated about the rotational axis R₂, using the sample rotating stage 54. At this time, a rotational speed is arbitrary changeable, but is set, for example, at 0.1 seconds per rotation in this embodiment (the same goes for measurement of the fitting conical surface 98 and the fitting bottom surface 99 described later on).
   2-e. While the measurement light is applied from the interferometric optical system 14 to the front surface 95 of the flange 92 of the rotated sample lens 9, the first imaging camera 24 having the one-dimensional image sensor 23 captures images of interference fringes formed by interference between reflected light from the front surface 95 and reference light at established intervals, to obtain image data corresponding to a single rotation of the front surface 95 of the flange 92. Note that, in the case of performing the fringe scan measurement, the position of the interferometric optical system 14 is appropriately changed using the fringe scan adopter 28 in the direction of the optical axis L. Whenever the position of the interferometric optical system 14 is changed, the sample lens 9 is rotated. While the sample lens 9 makes a single rotation, plural images of the interference fringes corresponding to the front surface 95 are captured at different rotational positions. The number of the images to be captured is arbitrary changeable, but in this embodiment, for example, 3600 images are captured while the sample lens 9 makes one rotation i.e. within 0.1 seconds. In other words, the one image is captured whenever the sample lens 9 rotates by 0.1 degrees (the same goes for measurement of the fitting conical surface 98 and the fitting bottom surface 99 described later on). Also, whenever the image is captured at every different rotational position, the rotary encoder 55 detects a rotational angle of the sample lens 9 at the time of capturing the image.
   2-f. The surface shape analyzer 73 analyzes the shape of the front surface 95 of the flange 92, based on the obtained images of the interference fringes during rotation of the sample lens 9 and detection data of the rotational position at the time of taking each image.
3. Measurement of the fitting conical surface 98 is carried out as follows:
   3-a. The position of the interferometric optical system 14 relative to the sample lens 9 is adjusted, such that the optical axis L intersects with the fitting conical surface 98 in a virtual plane containing the central axis C₉ and the optical axis L, and the optical axis L is orthogonal to a tangent plane of the fitting conical surface 98 at an intersection point of the optical axis L and the fitting conical surface 98 (see Fig. 4), and the measurement light from the interferometric optical system 14 is gathered on and applied to the fitting conical surface 98. The above relative position adjustment is automatically carried out by the optical axis adjuster 71 based on the design data of the sample lens 9, driving the interferometer tilting stage 32, the interferometer Z-axis moving stage 33, the interferometer Y-axis tilting stage 34, the interferometer X-axis moving stage 35, and the sample Y-axis moving stage 56.
   3-b. In a state where the central axis C₉ and the rotational axis R₂ are aligned with each other, the sample lens 9 is continuously rotated about the rotational axis R₂, using the sample rotating stage 54.
   3-c. While the measurement light is applied from the interferometric optical system 14 to the fitting conical surface 98 of the rotated sample lens 9, the first imaging camera 24 having the one-dimensional image sensor 23 captures images of interference fringes formed by interference between reflected light from the fitting conical surface 98 and reference light, to obtain image data corresponding to a single rotation of the fitting conical surface 98. Note that, in the case of performing the fringe scan measurement, the position of the interferometric optical system 14 is appropriately changed using the fringe scan adopter 28 in the direction of the optical axis L. Whenever the position of the interferometric optical system 14 is changed, the sample lens 9 is rotated. An image of the interference fringes of the fitting conical surface 98 is captured at every different rotational position. Also, whenever the image is captured, the rotary encoder 55 detects a rotational angle of the sample lens 9 at the time of capturing each image.
   3-d. The surface shape analyzer 73 analyzes the shape of the fitting conical surface 98, based on the obtained images of the interference fringes during rotation of the sample lens 9 and detection data of the rotational position at the time of taking each image.
   3-e. The inclination angle calculator 74 calculates the inclination angle of the fitting conical surface 98, based on the obtained images of the interference fringes at the different rotational positions and the detection data of the rotational position at the time of taking each image. An arrangement of the images of the interference fringes of the single rotation corresponds to a development plane of the fitting conical surface 98 consisting of the circular conical surface. From the arrangement of the images, an inclination angle component value of the fitting conical surface 98 in a generatrix direction and an inclination angle component value of the fitting conical surface 98 in a circumferential direction are obtained. The inclination angle component value in the generatrix direction corresponds with a deviation of the inclination angle of the fitting conical surface 98 from a designed value. Thus, it is possible to calculate an actual inclination angle of the fitting conical surface 98 by inverse operation from the designed value.
   3-f. The inner diameter calculator 75 calculates the inner diameter φ of the flange 92 (see Fig. 6A) , based on the obtained images of the interference fringes at the different rotational positions and the detection data of the rotational position at the time of taking each image. In calculation of the inner diameter φ, each image is subjected to binary processing based on its fringe contrast (or modulation), to detect edges of the interference fringes. Thereby, a border between the fitting conical surface 98 and the front surface 95 of the flange 92 is identified.
4. Measurement of the fitting bottom surface 99 is carried out as follows:
   4-a. The position of the interferometric optical system 14 relative to the sample lens 9 is adjusted, such that the optical axis L orthogonally intersects with the fitting bottom surface 99 in a virtual plane containing the central axis C₉ and the optical axis L (see Fig. 5), and the measurement light from the interferometric optical system 14 is gathered on and applied to the fitting bottom surface 99. The above relative position adjustment is automatically carried out by the optical axis adjuster 71 based on the design data of the sample lens 9, using the interferometer tilting stage 32, the interferometer Z-axis moving stage 33, the interferometer Y-axis tilting stage 34, the interferometer X-axis moving stage 35, and the sample Y-axis moving stage 56.
   4-b. Using the fringe scan adapter 28, the interferometric optical system 14 is successively shifted by a minute distance in the direction of the optical axis L. Whenever the interferometric optical system 14 is shifted, the measurement light is applied from the interferometric optical system 14 to the fitting bottom surface 99. The second imaging camera 27 having the two-dimensional image sensor 26 captures an image of interference fringes formed by interference between reflected light from the fitting bottom surface 99 and reference light.
   4-c. The fitting step height calculator 76 calculates fringe contrast (or modulation) in each image of the interference fringes captured every time the interferometric optical system 14 is shifted. Thereby, the position of the interferometric optical system 14 that maximizes the fringe contrast is obtained in the direction of the optical axis L. The fitting step height "d" (see Fig. 6A) is calculated by a distance between the position of the interferometric optical system 14 of this time in the direction of the optical axis L and the position of the interferometric optical system 14 opposed to the front surface 95 of the flange 92 in the direction of the optical axis L, which is obtained in the above step 2-c.
   4-d. In a state where the central axis C₉ and the rotational axis R₂ are aligned with each other, the sample lens 9 is rotated about the rotational axis R₂, using the sample rotating stage 54.
   4-e. While the measurement light is applied from the interferometric optical system 14 to the fitting bottom surface 99 of the rotated sample lens 9, the first imaging camera 24 having the one-dimensional image sensor 23 captures images of interference fringes formed by interference between reflected light from the fitting bottom surface 99 and reference light, to obtain image data corresponding to a single rotation of the fitting bottom surface 99. Note that, in the case of performing the fringe scan measurement, the position of the interferometric optical system 14 is appropriately changed using the fringe scan adopter 28 in the direction of the optical axis L. Whenever the position of the interferometric optical system 14 is changed, the sample lens 9 is rotated. While the sample lens 9 makes a single rotation, plural images of the interference fringes of the fitting bottom surface 99 are captured at different rotational positions. Whenever the image is captured at every different rotational position, the rotary encoder 55 detects a rotational angle of the sample lens 9 at the time of taking each image.
   4-f. The surface shape analyzer 73 analyzes the shape of the fitting bottom surface 99, based on the obtained images of the interference fringes at the different rotational positions and detection data of the rotational position at the time of taking each image.

### Second Embodiment

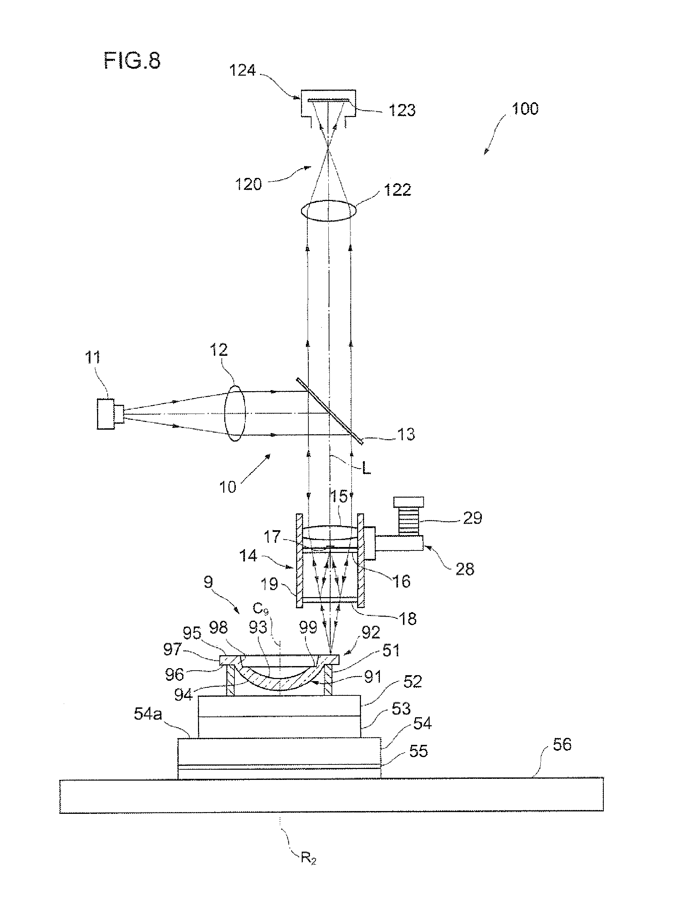

In the first embodiment, the microinterferometer 1 is provided with the one-dimensional imaging system 20A for taking plural images during rotation of the test surface, and a two-dimensional imaging system 20B for taking an image when the test surface is stopped. A microinterferometer 100 according to a second embodiment, as shown in Fig. 8, is provided only with a two-dimensional imaging system 120. The one-dimensional imaging system 20A captures the images at the established intervals, while the sample lens 9 is continuously rotated, for example. In the second embodiment, the sample lens 9 is intermittently rotated, and the two-dimensional imaging system 120 captures an image while the sample lens 9 is stopped between the intermittent rotational movements. Since the other structure of the microinterferometer 100 is the same as that of the first embodiment, the detailed description thereof is omitted.

The imaging unit 120 includes an image-forming lens 122 for gathering the interference light traveling upward through the light dividing optical element 13, and an imaging camera 124 having a two-dimensional image sensor 123 such as a CCD or CMOS. The imaging unit 120 captures an image of interference fringes formed by the image-forming lens 122 on the two-dimensional image sensor 123.

### <Measurement of Test Surfaces>

Measurement steps of each of the test surfaces (the front surface 95 of the flange 92, the fitting conical surface 98, and the fitting bottom surface 99) of the sample lens 9 according to the second embodiment will be described.
1. Using the sample mounting stage 51, the sample lens 9 is supported from the side of the rear surface 96, such that the first lens surface 93 is opposed to the microinterferometer 1. Furthermore, precise alignment between the central axis C₉ and the rotational axis R₂ is carried out as with the first embodiment, using the two-dimensional image sensor 123 of the imaging camera 124. Since concrete steps of the alignment are the same as those of the first embodiment, the detailed description thereof is omitted.
2. The front surface 95 of the flange 92 is measured as follows:
   2-a. The position of the interferometric optical system 14 relative to the sample lens 9 is adjusted, such that the optical axis L orthogonally intersects with the front surface 95 of the flange 92 in a virtual plane containing the central axis C₉ and the optical axis L, and the measurement light from the interferometric optical system 14 is gathered on and applied to the front surface 95 of the flange 92 (see Fig. 2).
   2-b. Using the fringe scan adapter 28, the interferometric optical system 14 is successively shifted by a minute distance in the direction of the optical axis L. Whenever the interferometric optical system 14 is shifted, the measurement light is applied from the interferometric optical system 14 to the front surface 95 of the flange 92, and the imaging camera 124 having the two-dimensional image sensor 123 captures an image of the interference fringes formed by interference between reflected light from the front surface 95 and reference light.
   2-c. The fitting step height calculator 76 calculates fringe contrast (or modulation) in each image of the interference fringes captured every time the interferometric optical system 14 is shifted. Thereby, the position of the interferometric optical system 14 that maximizes the fringe contrast is obtained in the direction of the optical axis L.
   2-d. In a state where the central axis C₉ and the rotational axis R₂ are aligned with each other, the sample lens 9 is rotated about the rotational axis R₂ intermittently by a predetermined angle, using the sample rotating stage 54. At this time, the predetermined angle is arbitrary changeable, but is set, for example, at 10 degrees in this embodiment (the same goes for measurement of the fitting conical surface 98 and the fitting bottom surface 99 described later on).
   2-e. The sample lens 9 is rotated intermittently by the predetermined angle. After each rotation, the measurement light is applied from the interferometric optical system 14 to the front surface 95 of the flange 92 of the sample lens 9. The imaging camera 124 having the two-dimensional image sensor 123 captures an image of interference fringes formed by interference between reflected light from the front surface 95 and reference light. Thereby, image data corresponding to a single rotation of the front surface 95 of the flange 92 is obtained. Note that, the predetermined angle is determined, such that an image capturing field before the rotation of the sample lens 9 by the predetermined angle partly overlaps with that after the rotation by the predetermined angle. This makes it possible to apply a synthetic aperture method to the images of the interference fringes, as described later on. Also, in the case of performing the fringe scan measurement, the position of the interferometric optical system 14 is appropriately changed using the fringe scan adopter 28 in the direction of the optical axis L. In each position of the interferometric optical system 14, the sample lens 9 is rotated intermittently by the predetermined angle, and plural images of the interference fringes of the front surface 95 are captured at different rotational positions. Whenever the image is captured at every different rotational position, the rotary encoder 55 detects a rotational angle of the sample lens 9 at the time of taking each image.
   2-f. The surface shape analyzer 73 analyzes the shape of the front surface 95 of the flange 92, based on the obtained images of the interference fringes captured at the different rotational positions and detection data of the rotational position at the time of taking each image. To be more specific, the shape of a part of the front surface 95 of the flange 92 is analyzed from each of the images. The shape of all the parts is put together to obtain the shape of the entire front surface 95 of the flange 92.
3. Measurement of the fitting conical surface 98 is carried out as follows:
   3-a. The position of the interferometric optical system 14 relative to the sample lens 9 is adjusted, such that the optical axis L intersects with the fitting conical surface 98 in a virtual plane containing the central axis C₉ and the optical axis L, and the optical axis L is orthogonal to a tangent plane of the fitting conical surface 98 at an intersection point of the optical axis L and the fitting conical surface 98 (see Fig. 4), and the measurement light from the interferometric optical system 14 is gathered on and applied to the fitting conical surface 98. The above relative position adjustment is automatically carried out by the optical axis adjuster 71 based on the design data of the sample lens 9, using the interferometer tilting stage 32, the interferometer Z-axis moving stage 33, the interferometer Y-axis tilting stage 34, the interferometer X-axis moving stage 35, and the sample Y-axis moving stage 56.
   3-b. In a state where the central axis C₉ and the rotational axis R₂ are aligned with each other, the sample lens 9 is rotated about the rotational axis R₂ intermittently by the predetermined angle, using the sample rotating stage 54.
   3-c. Whenever the sample lens 9 is rotated by the predetermined angle and stopped, the measurement light is applied from the interferometric optical system 14 to the fitting conical surface 98 of the sample lens 9. The imaging camera 124 having the two-dimensional image sensor 123 captures an image of interference fringes formed by interference between reflected light from the fitting conical surface 98 and reference light. Thereby, image data corresponding to a single rotation of the fitting conical surface 98 is obtained. Note that, in the case of performing the fringe scan measurement, the position of the interferometric optical system 14 is appropriately changed using the fringe scan adopter 28 in the direction of the optical axis L. In each position of the interferometric optical system 14, the sample lens 9 is rotated intermittently by the predetermined angle. The image of the interference fringes is captured, whenever the sample lens 9 is stopped between the intermittent rotational movements. Whenever the image is captured at every different rotational position, the rotary encoder 55 detects a rotational angle of the sample lens 9 at the time of taking each image. Note that, the predetermined angle is determined, such that an image capturing field before the intermittent rotational movement of the sample lens 9 partly overlaps with that after the intermittent rotational movement. This makes it possible to apply the synthetic aperture method to the images of the interference fringes, as described later on.
   3-d. The surface shape analyzer 73 analyzes the shape of the fitting conical surface 98 based on the obtained images of the interference fringes captured at the different rotational positions and detection data of the rotational position at the time of taking each image. To be more specific, the shape of a part of the fitting conical surface 98 is analyzed from each of the images. The shape of all the parts is put together by the conventional synthetic aperture method, to obtain the shape of the entire fitting conical surface 98.
   3-e. The inclination angle calculator 74 calculates the inclination angle of the fitting conical surface 98, based on the obtained images of the interference fringes captured at the different rotational positions and the detection data of the rotational position at the time of taking each image.
   3-f. The inner diameter calculator 75 calculates the inner diameter φ of the flange 92 (see Fig. 6A), based on the obtained images of the interference fringes captured at the different rotational positions and the detection data of the rotational position at the time of taking each image. In calculation of the inner diameter φ, each image is subjected to binary processing based on its fringe contrast (or modulation). Thereby, edges of the interference fringes are detected, and hence a border between the fitting conical surface 98 and the front surface 95 of the flange 92 is identified.
4. Measurement of the fitting bottom surface 99 is carried out as follows:
   4-a. The position of the interferometric optical system 14 relative to the sample lens 9 is adjusted, such that the optical axis L orthogonally intersects with the fitting bottom surface 99 in a virtual plane containing the central axis C₉ and the optical axis L (see Fig. 5), and the measurement light from the interferometric optical system 14 is gathered on and applied to the fitting bottom surface 99. The above relative position adjustment is automatically carried out by the optical axis adjuster 71 based on the design data of the sample lens 9, using the interferometer tilting stage 32, the interferometer Z-axis moving stage 33, the interferometer Y-axis tilting stage 34, the interferometer X-axis moving stage 35, and the sample Y-axis moving stage 56.
   4-b. Using the fringe scan adapter 28, the interferometric optical system 14 is successively shifted by a minute distance in the direction of the optical axis L. Whenever the interferometric optical system 14 is shifted, the measurement light is applied from the interferometric optical system 14 to the fitting bottom surface 99, and the imaging camera 124 having the two-dimensional image sensor 123 captures an image of the interference fringes formed by interference between reflected light from the fitting bottom surface 99 and reference light.
   4-c. The fitting step height calculator 76 calculates fringe contrast (or modulation) in each image of the interference fringes captured every time the interferometric optical system 14 is shifted. Thereby, the position of the interferometric optical system 14 that maximizes the fringe contrast is obtained in the direction of the optical axis L. The fitting step height "d" (see Fig. 6A) is calculated by the distance between the position of the interferometric optical system 14 of this time in the direction of the optical axis L and the position of the interferometric optical system 14 opposed to the front surface 95 of the flange 92 in the direction of the optical axis L, which is obtained in the above step 2-c.
   4-d. In a state where the central axis C₉ and the rotational axis R₂ are aligned with each other, the sample lens 9 is rotated about the rotational axis R₂ intermittently by the predetermined angle, using the sample rotating stage 54.
   4-e. The sample lens 9 is rotated intermittently by the predetermined angle. Whenever the sample lens 9 is stopped between the intermittent rotational movements, the measurement light is applied from the interferometric optical system 14 to the fitting bottom surface 99 of the sample lens 9. The imaging camera 124 having the two-dimensional image sensor 123 captures an image corresponding to the fitting bottom surface 99, that is, an image of interference fringes formed by interference between reflected light from the fitting bottom surface 99 and reference light. Thereby, image data corresponding to a single rotation of the fitting bottom surface 99 is obtained. Note that, the above predetermined angle is determined, such that the image capturing field before the rotation of the sample lens 9 by the predetermined angle partly overlaps with that after the rotation by the predetermined angle. This makes it possible to apply the synthetic aperture method to the images of the interference fringes, as described later on. Also, in the case of performing the fringe scan measurement, the position of the interferometric optical system 14 is appropriately changed using the fringe scan adopter 28 in the direction of the optical axis L. In each position of the interferometric optical system 14, the sample lens 9 is rotated intermittently by the predetermined angle. Whenever the sample lens 9 is stopped between the intermittent rotational movements, the image of the interference fringes is captured. Whenever the image is captured at every different rotational position, the rotary encoder 55 detects a rotational angle of the sample lens 9 at the time of taking each image.
   4-f. The surface shape analyzer 73 analyzes the shape of the fitting bottom surface 99, based on the obtained images of the interference fringes captured at the different rotational positions and detection data of the rotational position at the time of taking each image. To be more specific, the shape of a part of the fitting bottom surface 99 is analyzed from each of the images. The shape of all the parts is put together by the conventionally known synthetic aperture method, to obtain the shape of the entire fitting bottom surface 99.

In the above embodiments, the Mirau interferometric optical system 14 is used, but a Michelson interferometric optical system (not shown) may be used instead.

In the above embodiments, the aspheric lens (sample lens 9) is used as a sample. However, the lightwave interference measurement apparatus according to the present invention is applicable to measurement of various samples having a test surface formed of a rotationally symmetric ruled surface.

Although the present invention has been fully described by the way of the preferred embodiment thereof with reference to the accompanying drawings, various changes and modifications will be apparent to those having skill in this field. Therefore, unless otherwise these changes and modifications depart from the scope of the present invention as defined by the claims, they should be construed as included therein.

## Claims

1. A lightwave interference measurement apparatus for measuring a test surface (95, 98, 99) of a sample (9), said sample (9) being disposed in an optical axis (L) of low coherent measurement light, said test surface (95, 98, 99) being a rotationally symmetric ruled surface, said lightwave interference measurement apparatus comprising:
a sample rotating stage for rotating said test surface (95, 98, 99) about a rotational axis (R₂);
an interferometric optical system (14) for applying said measurement light traveling along said optical axis (L) in a converging manner to said test surface (95, 98, 99) , and producing interference light by combining reflected light of said measurement light reflected from said test surface (95, 98, 99) with reference light;
an imaging system (20A, 120) having an image sensor (23, 123), for taking in said interference light in each of plural rotational positions of said test surface (95, 98, 99) to obtain image data of interference fringes; and
a surface shape analyzer (73) for analyzing a shape of said test surface (95, 98, 99) based on said image data of said interference fringes.

2. The lightwave interference measurement apparatus according to claim 1, wherein
said image sensor (23) is a one-dimensional image sensor,
and
said sample rotating stage (54) continuously rotates said test surface (95, 98, 99), and
said imaging system (20A) captures an image of said interference fringes during continuous rotation of said test surface (95, 98, 99).

3. The lightwave interference measurement apparatus according to claim 2, further comprising:
a light dividing optical element (21) disposed between said interferometric optical system (14) and said imaging system (20A), for dividing a light beam by reflection and transmission; and
an adjustment imaging system (27) for taking in said interference light reflected by said light dividing optical element (21), said adjustment imaging system (27) having a two-dimensional image sensor (26).

4. The lightwave interference measurement apparatus according to claim 3, wherein
optical axis adjustment and central axis adjustment are performed based on an image of interference fringes taken by said adjustment imaging system (27), and
in said optical axis adjustment, a position of said optical axis (L) relative to a central axis (C₉) of said test surface (95, 98, 99) is adjusted, and
in said central axis adjustment, a position of said central axis (C₉) relative to said rotational axis (R₂) is adjusted.

5. The lightwave interference measurement apparatus according to claim 1, wherein
said image sensor (123) is a two-dimensional image sensor,
and
said sample rotating stage (54) intermittently rotates said test surface (95, 98, 99), and
said imaging system (120) captures an image of said interference fringes, while said test surface (95, 98, 99) is stopped between intermittent rotational movements.

6. The lightwave interference measurement apparatus according to claim 5, wherein
optical axis adjustment and central axis adjustment are performed based on said image of said interference fringes taken by said imaging system (120), and
in said optical axis adjustment, a position of said optical axis (L) relative to a central axis (C₉) of said test surface (95, 98, 99) is adjusted, and
in said central axis adjustment, a position of said central axis (C₉) relative to said rotational axis (R₂) is adjusted.

7. The lightwave interference measurement apparatus of claim 1, further comprising:
an optical axis adjustment section (71, 32, 33, 34, 35, 56) for adjusting a position of said optical axis (L) relative to a central axis (C₉) of said test surface (95, 98, 99), such that said optical axis (L) intersects with said test surface (95, 98, 99) in a virtual plane containing said central axis (C₉) of said test surface (95, 98, 99) and said optical axis (L), and said optical axis (L) is orthogonal to a tangent plane of said test surface (95, 98, 99) at an intersection point of said optical axis (L) and said test surface (95, 98, 99); and
a central axis adjustment section (72, 52, 53) for adjusting a position of said central axis (C₉) relative to said rotational axis (R₂), so as to align said central axis (C₉) and said rotational axis (R₂) with each other;
wherein the imaging system (20A) has a one-dimensional image sensor (23), for taking in said interference light in each of plural rotational positions of said test surface (95, 98, 99) to obtain image data of interference fringes.

8. The lightwave interference measurement apparatus according to claim 7, further comprising:
an inclination angle calculator (74) for calculating an inclination angle of said test surface (95, 98, 99) based on said image data of said interference fringes.

9. The lightwave interference measurement apparatus according to claim 7, wherein said sample (9) is a fitting lens, and said test surface (98) is a fitting surface formed of a circular conical surface.

10. The lightwave interference measurement apparatus of any of claims 7 to 9, wherein:
the sample rotating stage (54) is for intermittently rotating said test surface (95, 96, 99) by a predetermined angle about an rotational axis (R₂) ; and
the imaging system (120) has a two-dimensional image sensor (123), for taking in said interference light in each of plural rotational positions of said test surface (95, 98, 99) to obtain image data of interference fringes.
